# EUROPEAN PATENT APPLICATION

(11) **EP 3 582 122 A1**
(43) Date of publication of application: **18.12.2019**
(21) Application number: 18177539.6
(22) Date of filing: 13.06.2018
(51) Int. Cl.: G06F 17/30

(54) **A METHOD AND APPARATUS FOR AUTOMATIC EXTENSION OF AN APPLICATION QUERY INTERFACE OF AN INDUSTRIAL SYSTEM**

(71) Applicant: Siemens Aktiengesellschaft, 80333 München (DE)
(72) Inventor: Fischer, Jan-Gregor, 85604 Zorneding (DE); Gallmeier, Rudolf, 81673 München (DE); Pirker, Michael, 83661 Lenggries (DE)

(57) **Abstract**

A method and apparatus for automatic extension of an application query interface, AQI, of an industrial system, comprising the steps of: monitoring (S1) queries, Q, input by means of an application query interface, AQI, (4) of an industrial system; performing (S2) a statistic and semantic analysis of the monitored queries, Q, by a query analysis unit, QAU, (2) to determine reoccurring queries and/or reoccurring query portions within the monitored queries, Q; and extending (S3) automatically the application query interface, AQI, (4) of the industrial system with query interface elements, QIE, generated for the reoccurring queries and/or reoccurring query portions.

## Description

The invention relates to a method and an apparatus for automatic extension of an application query interface of an industrial system such as a manufacturing facility.

Industrial facilities can comprise monitoring and diagnostic systems in order to monitor the operational behavior of the industrial system and to perform a diagnosis or analysis of the current system state of the industrial system. For the different use cases it can be difficult to anticipate the required query interface functionality of an application query interface of the industrial system. For instance data collected from a multitude of different field devices in the form of time series data should be retrievable by specific criteria such as a certain OEM, a specific plant, or a predefined device class, etc.

In such a scenario an interface designer has a choice between providing a generic interface, allowing a user to create a query arbitrary like "retrieve the time series of all devices class X" or "retrieve time series of OEM Y in plant Z". On the other hand, an interface designer can opt for a more elaborate interface already offering predefined queries like "oem-y-plant-z". This predefined query returns exactly the same results as the previous queries, however, it lowers the efforts for the user as the user does not have to compose the respective query on his own. Instead the user only has to select in the application query interface AQI the predefined prepared query, for instance clicking on a graphical user interface symbol. In conventional diagnostic and monitoring systems of industrial facilities an interface designer tries to make an informed decision about required interface functionalities and interface granularities, or follows a layered approach. If the interface designer implements the required interface functionality and interface granularity according to his experience, it may happen that the system after having been deployed or handed over to the customer, undergoes changes requiring also changes of the application query interfaces AQI of the respective system. Incremental versions of the system normally require interface modifications and/or interface extensions of the application query interfaces AQI of the respective system. It is almost impossible for an interface designer to anticipate all real world situations that a user of the system expects from the interface to be fulfilled.

If the interface designer of the application query interface follows a layered approach, the interface is specified and created by different parties. A lowest layer of the interface may be created by the interface designer himself and may offer a quite generic query interface lacking any specifics about a customer, a domain, a device class, etc. The following higher interface layers of the interface can be created by OEMs, device manufacturers, etc. and provide more elaborate query possibilities above the generic interface layer. However, this increases the efforts for the customers when adapting the interfaces to their unique needs. The extra efforts on the customer side turn out to be counter-productive as very often the interface design depends on an intimate knowledge of the data model the interface works on. Consequently, the data model must at least to some extent be released to the customer in addition to other documentation regarding the interface and its extension possibilities. In the case of failing to do so, either the interface extension fails to use all possibilities of the data model, or malfunctions due to misunderstanding in diagnostic and/or monitoring functionalities by third parties or costumers may occur.

Accordingly, it is an object of the present invention to provide a method and an apparatus for automatic extension of an application query interface of an industrial system meeting the requirements of a user or customer.

This object is achieved according to a first aspect of the present invention by a method for automatic extension of an application query interface of an industrial system comprising the features of claim 1.

The invention provides according to a first aspect a method for automatic extension of an application query interface of an industrial system, comprising the steps of:
monitoring queries input by means of an application query interface of an industrial system;
performing a statistic and semantic analysis of the monitored queries by a query analysis unit to determine reoccurring queries and/or reoccurring query portions within the monitored queries and
extending automatically the application query interface of the industrial system with query interface elements generated for the reoccurring queries and/or reoccurring query portions.

In a possible embodiment of the method according to the first aspect of the present invention each monitored query is automatically decomposed in query portions, by a query decomposition module of the query analysis unit.

In a possible embodiment of the method according to the first aspect of the present invention the monitored queries and the decomposed query portions are evaluated by at least one statistic and/or semantic based query analysis algorithm of an algorithm pool to determine reoccurring queries and/or reoccurring query portions within the monitored queries.

In a further possible embodiment of the method according to the first aspect of the present invention the semantic analysis of the monitored queries is performed on the basis of a semantic model of the industrial system stored in a semantic model database.

In a further possible embodiment of the method according to the first aspect of the present invention the semantic model, of the industrial system comprises an ontological data model of the industrial system stored in the semantic model database.

In a further possible embodiment of the method according to the first aspect of the present invention the semantic model of the industrial system stored in the semantic model database is extended by semantic model parts created by a semantic model part construction module for the determined reoccurring queries and/or reoccurring query portions.

In a still further possible embodiment of the method according to the first aspect of the present invention the semantic model of the industrial system is updated during runtime of the industrial system.

In a still further possible embodiment of the method according to the first aspect of the present invention query interface elements are generated for the reoccurring queries and/or reoccurring query portions of the monitored queries by a query interface part construction module using predefined schemes, templates or rules.

In a still further possible embodiment of the method according to the first aspect of the present invention the application query interface is extended automatically with generated query interface elements provided for the generated query interface parts by a query interface compiler.

In a still further possible embodiment of the method according to the first aspect of the present invention the application query interface comprises a graphical production query interface which includes graphical query interface elements integrated by the query interface compiler.

The invention further provides according to a further aspect an apparatus for automatic extension of an application query interface of an industrial system comprising the features of claim 10.

The invention provides according to the second aspect an apparatus for automatic extension of an application query interface of an industrial system, wherein said apparatus comprises:
a query analysis unit adapted to monitor queries input by means of an application query interface of an industrial system and to perform a statistic and semantic analysis of the monitored queries to determine reoccurring queries and/or reoccurring query portions within the monitored queries, and comprising
a query interface compiler adapted to extend automatically the application query interface of the industrial system with query interface elements generated for the reoccurring queries and/or reoccurring query portions determined by said query analysis unit.

In a possible embodiment of the apparatus according to the second aspect of the present invention query analysis unit comprises a query decomposition module adapted to decompose automatically each monitored query into query portions.

In a possible embodiment of the apparatus according to the second aspect of the present invention the query analysis unit comprises:
a statistical analysis module adapted to perform a statistical analysis of the monitored queries and/or query portions using statistics based query analysis algorithms, and
a semantic analysis module adapted to perform a semantic analysis of the monitored queries and/or query portions on the basis of a semantic model of the industrial system stored in a semantic model database of the apparatus.

In a further possible embodiment of the apparatus according to the second aspect of the present invention the reoccurring queries and/or reoccurring query portions determined by the query analysis unit are stored in a query database of the apparatus.

In a still further possible embodiment of the apparatus according to the second aspect of the present invention the apparatus further comprises
a query interface part construction module adapted to generate query interface parts for the determined reoccurring queries and reoccurring query portions which do not yet comprise associated query interface parts, wherein the query interface parts generated by the query interface part construction module are supplied to the query interface compiler of the apparatus which extends automatically the application query interface of the industrial system by integrating query interface elements provided for the generated query interface parts into the application query interface.

In a still further possible embodiment of the apparatus according to the second aspect of the present invention the apparatus further comprises a semantic model part construction module adapted to extend automatically the semantic model of the industrial system stored in the semantic model database of the apparatus with semantic model parts generated by the semantic model part construction module for the reoccurring queries and/or reoccurring query portions determined by the query analysis unit of the apparatus.

In the following possible embodiments of the different aspects of the present invention are described in more detail with reference to the enclosed figures.
- Fig. 1: shows a block diagram of a possible exemplary embodiment of an apparatus for automatic extension of an application query interface of an industrial system according to an aspect of the present invention;
- Fig. 2: shows a schematic diagram for illustrating a further possible exemplary embodiment of an apparatus for automatic extension of an application query interface of an industrial system;
- Fig. 3: shows a schematic flowchart for illustrating a possible exemplary embodiment of a method for automatic extension of an application query interface of an industrial system according to a further aspect of the present invention.

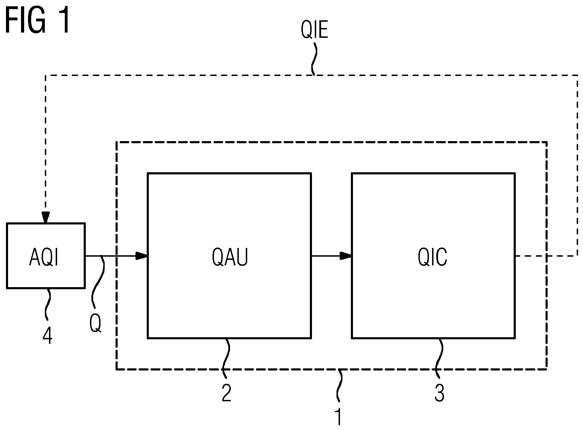

As can be seen in the block diagram of Fig. 1 the apparatus 1 for automatic extension of an application query interface AQI of an industrial system comprises in the illustrated exemplary embodiment two main components. The apparatus 1 comprises in the illustrated embodiment a query analysis unit (QAU) 2 and a query interface compiler (QIC) 3. The apparatus 1 as shown in Fig. 1 is adapted to form an automatic extension of an application query interface (AQI) 4 of an industrial system. The query analysis unit 2 monitors queries Q input by means of the application query interface 4 of the industrial system. The industrial system can be for instance a production facility or any other kind of facility comprising one or more application query interfaces 4. The input queries are supplied to the query analysis unit 2 of the apparatus 1. The query analysis unit 2 comprises at least one processor adapted to perform a statistic and semantic analysis of the monitored queries Q to determine reoccurring queries and/or reoccurring query portions within the monitored queries Q. The apparatus 1 further comprises a query interface compiler 3 which is adapted to extend automatically the application query interface 4 of the industrial system with query interface elements QIE generated for the reoccurring queries and/or reoccurring query portions determined by the query analysis unit 2.

The query analysis unit 2 can comprise in a possible embodiment a query decomposition module which is adapted to decompose automatically each received query Q into query portions. The query analysis unit 2 can further comprise a statistical analysis module adapted to perform a statistical analysis of the monitored queries and/or decomposed query portions using statistics based query analysis algorithms. The query analysis unit 2 can further comprise a semantic analysis module adapted to perform a semantic analysis of the monitored queries and/or query portions on the basis of the semantic model of the industrial system stored in a semantic model database of the apparatus 1. The reoccurring queries Q and/or reoccurring query portions QP determined by the query analysis unit 2 can be stored in a possible embodiment in a query database of the apparatus 1.

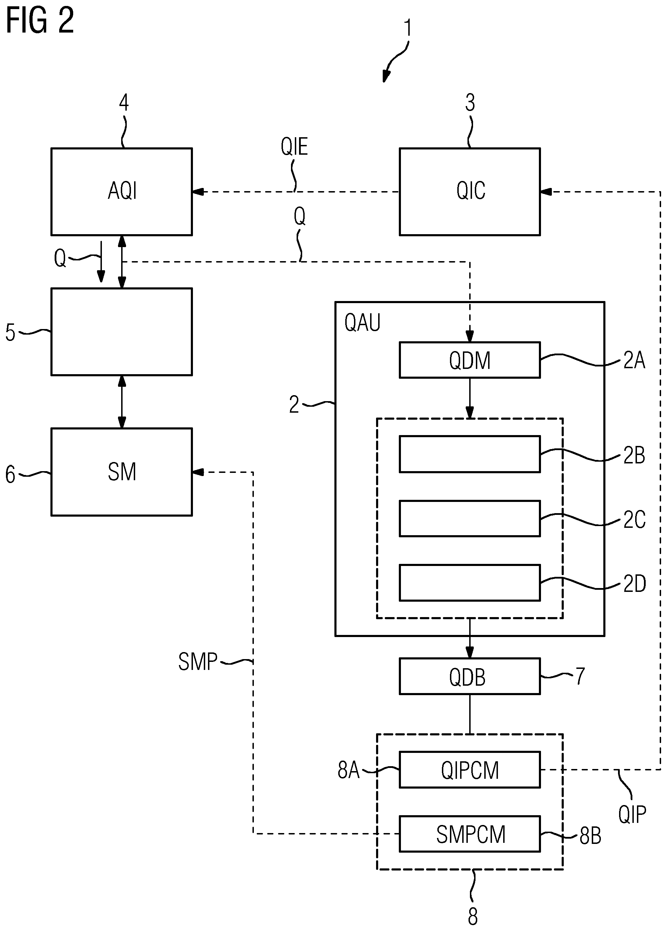

Fig. 2 illustrates a possible exemplary embodiment of an apparatus 1 for automatic extension of an application query interface AQI of an industrial system. In the illustrated embodiment of Fig. 2 the query analysis unit 2 is connected to the application query interface AQI of the industrial system. The application query interface AQI can comprise for instance a production query interface. The query analysis unit 2 is adapted to monitor queries Q input by means of the application query interface 4 of the industrial system into a diagnostic and/or monitoring system 5 of the industrial system. The query analysis unit 2 comprises in the illustrated exemplary embodiment of Fig. 2 a query decomposition module 2A adapted to decompose automatically each monitored query Q into query portions QP.

The query analysis unit 2 further comprises in the illustrated embodiment a statistical analysis module 2B adapted to perform a statistical analysis of the monitored queries Q and/or query portions QP using statistics based query analysis algorithms. The statistics based algorithm can in a simple form count for instance the occurrences of a specific query Q or query portions QP received from the production query interface 4. An increased occurrence of the same queries Q or query portions QP indicates a need for a query extension. For example, if the query "retrieve time-series of OEM Y in PLANT Z" occurs regularly the creation or generation of a new production query interface part is necessary; "ts:oem-y-plant-z". In this case a query interface user would no longer be required to create his user-specific query out of generic query interface elements like "retrieve time-series" and "in" but would be able to simply use the newly generated query interface part "ts:oem-y-plant-z" which is offered to him after a certain time (when the statistics based threshold count exceeds a certain value) automatically as part of the extended application query interface AQI. The statistics based analysis performed by the statistic analysis module 2B can be based on arbitrary complex analysis methods or algorithms suited for the diagnostic and/or monitoring system and production query interface 4 in place, for instance probabilistic counting algorithms.

The query analysis unit 2 further comprises a semantic analysis module 2C adapted to perform a semantic analysis of the monitored queries Q and/or query portions QP on the basis of a semantic model SM of the industrial system stored in a semantic model database 6 of the apparatus 1. The semantic analysis module 2C can in a possible embodiment match parts of incoming queries Q against elements in the system's diagnostic and/or monitoring data model. When a match is identified (slightly) deviating queries from the production query interface 4 can be classified by the semantic analysis module as one single query. This can reduce the multitude of new query parts and query portions generated for the production query interface 4. For example, the following two queries "retrieve time-series of OEM Y in PLANT Z" and "retrieve time-series of CUSTOMER Y in PLANT Z" can be detected by the semantic analysis module 2C to form the same query Q. Due to the fact that the semantic analysis module 2C includes the information that an "OEM is always a CUSTOMER" (OEM is subclass of CUSTOMER" the semantic analysis module 2C can derive automatically that the meaning of the two slightly different queries is in fact the same. This in turn can influence the statistical counting and the number of created query interface parts. The semantic model SM stored in the semantic model database 6 can comprise a semantic description and integration of system events, a diagnosis case description and/or user queries. The semantic analysis module 2C of the query analysis unit 2 has access to the semantic model database 6 as illustrated in Fig. 2. The query analysis unit 2 comprises in a preferred embodiment as illustrated in Fig. 2 a query decomposition module 2A adapted to decompose automatically each monitored query Q into query parts or query portions. The query decomposition module 2A can take a complete query Q as received by the production query interface 4 such as "retrieve time-series of OEM Y in PLANT Z" and can identify single building blocks within the received query Q such as "retrieve" or "OEM Y". This basic terms or building blocks can be used in the subsequently performed analysis performed by the statistical analysis module 2B and/or the semantic analysis module 2C.

In the illustrated embodiment of Fig. 2 the apparatus 1 comprises a query database 7. Reoccurring queries and/or reoccurring query portions determined by the query analysis unit 2 can be stored in the query database 7. The query database 7 can store all information gathered and required during the analysis process performed by the query analysis unit 2. In the illustrated embodiment of Fig. 2 query analysis unit 2 further comprises an additional processing module 2D adapted to perform additional analytical algorithms on the basis of the query and/or query portions of the received queries.

In the illustrated embodiment of Fig. 2 the apparatus 1 further comprises a query and/or model part creation unit 8 with access to the query database 7 and to the semantic model database 6. The query and/or model part creation unit 8 includes a query interface part construction module (QIPCM) 8A and a semantic model part construction module (SMPCM) 8B. The query interface part construction module 8A is adapted to generate query interface parts QIP for the determined reoccurring queries Q and reoccurring query portions QP which do not yet comprise associated query interface elements QIE. The generated query interface parts QIP generated by the query interface part construction module 8A are supplied to the query interface compiler (QIP) 3 of apparatus 1 as illustrated in Fig. 2. The query interface compiler 3 extends automatically the application query interface 4 of the industrial system by integrating generated query interface elements QIE into the application query interface 4. The query interface part construction module 8A can create new query interface parts QIP for the application query interface 4. For example, a number of occurrences of the query "retrieve time-series of OEM Y in PLANT Z" can exceed a predefined threshold value. Consequently, this query Q is subject to an integration into the application query interface 4 of the industrial system. To create this new query interface part QIP, predefined schemes, templates and/or rules can be employed by the query interface part construction module 8A. For example, the template/rule
"retrieve time-series of VAR A in VAR B -> "ts:<VAR A>->VAR B>" is used to generate from the query Q
"retrieve time-series of OEM Y in PLANT Z"
the new query interface part QIP
"ts:oem-y-plant-z".
The query interface compiler 3 extends the application query interface 4. After the query interface compiler 3 has received the created new query interface part QIP like "ts:oem-y-plant-z" the query interface compiler 3 can generate an extended new application query interface including a query interface element QIE for the new query interface part QIP, e.g. a REST API for Web/http-based access. The creation of this extended application query interface AQI is done automatically by the provided software platform.

The semantic model part construction module SMPCM 8B extends automatically the semantic model SM of the industrial system stored in the semantic model database 6 with semantic model parts SMP generated by the semantic model part construction module 8B for the reoccurring queries and/or reoccurring query portions determined by the query analysis unit 2 of the apparatus 1 and stored in the query database 7. The semantic model part construction module 8B is provided to generate new semantic model parts SMPs. For instance, if it is required to improve runtime behavior of the system an OEM-CUSTOMER may be created. This stops the system from permanently deriving the fact that "OEM is a CUSTOMER" each time OEM is referenced in a query Q (and therefore every occurrence of OEM in any query can be replaced by CUSTOMER for further query analysis). A new model element (a class or an instance) can be created within the semantic model SM. The semantic model SM can comprise in a possible preferred embodiment an ontological data model. A reasoner software can be used to integrate new model parts or model elements within the existing semantic data model stored in the semantic model database 6. The semantic model SM is stored in the database 6 which aggregates information from physical devices and other information sources.

The automatic extension of the application query interface AQI and the semantic data model SM is described in the following with regard to an example.

Within automotive company A, one part of the production process is lacquering the car. Part of the lacquering is the actual application of color to metal pieces, performed by some sort of spraying device. In company A, this device is called "Spritzdüse". In addition, company A has placed the "Spritzdüse" in "Produktionslinie 32" and "Abschnitt 9". Company A: "Produktionslinie 32" -> "Abschnitt 9" - "Spritzdüse"

The spraying device is a critical component and therefore must be observed to prevent outages. It has sensors attached to it, which deliver sensor information (events) for further processing or information to human users. Therefore the spraying device is a data source.

### Company A:

```
 "Produktionslinie 32" -> "Abschnitt 9" -> [data-source:
 "Spritzdüse", event: "verstopft"]
```

A diagnosis software (Diagnosis System, Monitoring System) for the lacquering line includes, besides other components, a query interface (Production Query Interface) AQI 4 for use by employees of company A. Further this industrial software system includes some sort of data model (Semantic Model) defining the physical components and their characteristics of the lacquering production line, like

```
data-source: "Spritzdüse", events: {"verstopft", "frei"}
```

The data model is filled with data during runtime, e.g. from Produktionslinie 32, with Spritzduse-events, like "verstopft" or "frei".

An end user in company A, responsible for the functioning of the lacquering line, normally accesses the application via an application user interface, often this is some kind of application query interface AQI used in current industrial systems (allowing monitoring, diagnosis, information retrieval, etc.). This application query interface AQI is the frontend for the installed software system for the lacquering line where user queries can be processed and answered.

```
 Query in company A: "Produktionslinie 32, Abschnitt 9,
 Spritzdüse verstopft?"
```

In the first time of usage, the user, such as a diagnosis engineer, has to use the application query interface AQI 4 in the following way when he wants to find out if "Produktionslinie 32, Abschnitt 9, Spritzdüse" is "verstopft" : He opens the menu in the user interface AQI, where he can select different production lines. After selecting "Produktionslinie 32" he can select from an other user interface menu the correct submodules of the production line. The user performs a selection within this second menu "Abschnitt 9". Now the available event sources are displayed and he can select the "Spritzdüse" event source. The "Spritzdüse" event source has two possible types of events that can be read out. However, the engineer is only interested in "verstopft", that's why he selects it and sees that no events have been collected for this kind of event from the "Spritzduse".
The diagnosis engineer has to perform these steps, each time he wants to know if "Spritzduse" is "verstopft". When a Query Analysis unit 2, a Query/Model Part Creation unit 8 and a Query Interface Compiler 3 is installed in the system (in addition to the default components: Production Query Interface, Diagnosis System, Semantic Model, Event Database), the system functionality can be improved: After a certain time (e.g. several days of usage), the diagnosis engineer automatically sees an extra button on its diagnosis interface called "source:Spritzdüse -> event:verstopft abfragen". And all he has to do is to simply press this button to directly obtain the required information about the "Spritzdüse" event source. The inferace button forms a new query interface element QIE of the application query interface AQI 4 of the system.
In detail the additional components have worked as follows to create this new user-interface button:
The production query interface 4 of the diagnosis / monitoring application system 5 is used to gather the input for the query analysis unit 2. The unit 2 hosts a collection of query analysis methods, but at least two different methods: A statistics-based query analysis method and a semantics analysis method. The statistics based method, in its simplest form, counts the occurrences of a specific query Q or query portions QP coming from the production query interface 4. An increased occurrence of same queries/portions indicates the need for a query extension. As the diagnosis engineer has entered very often the very same sequence

```
 "Produktionslinie 32, Abschnitt 9, Spritzdüse" is "verstopft"
```

the Statistical Analysis method of the analysis pool comes to the decision that this is a newly identified query interface part (e.g. a button which must be shown on the user interface for use by the diagnosis engineer).

The Statistical Analysis module 2C is able to recognize this, because the Query Decomposition module 2A brakes down the whole sequence of user actions into single pieces (attribute value pairs):

```
 "Produktionslinie" == "32"
 " Abschnitt" == "9"
 " Spritzdüse" == "verstopft"
```

These single pieces are then counted over time, to find out if a certain threshold (e.g. count > 10) has been exceeded. If this happens, the application query interface 4 is extended as explained above.

The results of the Query analysis must be saved somewhere, for future reference, but also for further processing and production of the query interface extension. All this information (also the thresholds for statistical analysis, etc.) can be stored in the Query Database 7. E.g.
Record 23, user query: "Produktionslinie 32, Abschnitt 9, Spritzdüse" is "verstopft"
Record 23, count: 11
Record 23, atoms:

   ```
 "Produktionslinie" == "32": count: 11
 " Abschnitt" == "9" : count: 11
 " Spritzdüse" == "verstopft" : count: 11
```

Based on the information in the Query Database 7, the Query and Model Part Creation unit 8 starts its Query Interface Part Construction process. The Query Interface Part Construction module 8A creates a new query interface part QIP for the Production Interface 4 (the new button "source:Spritzdüse -> event:verstopft abfragen")

To create the new query interface button QIE, a pre-defined template, or rule might be employed. For example the template

```
VAR A, VAR B → "source:<VAR A> -> event:<VAR B>"
```

defines how to create such an interface button QIE.

In addition to the Query Interface Part Construction, the Semantic Model Part Construction Module 8B, as an optional module, can become necessary. The Semantic Model Part Construction Module 8B creates a new model part. For instance, if it is required to improve a runtime behavior of a specific "Produktionslinie 32, Abschnitt 9, Spritzduse" model element can be created. I.e. the single model and data elements are already connected to a complex model element, specifically describing a certain Spritzdüse (the one in Abschnitt 9 of Produktionslinie 32). This can, for instance improve system performance, as the single model elements have already been integrated (and processing time would be shorter than always connecting the different model elements from scratch, each time the query has to be processed).

Finally, the Query Interface Compiler QIC 3 generates an extended production interface 4.

After the Query Interface Compiler QIC 3 has received a new interface part like "source:Spritzdüse -> event:verstopft abfragen" it can generate a new query interface part, e.g. a REST API for Web/HTTP-based access. In this example the compiler 3 creates a new user-button QIE, as part of the graphical user interface GUI, which is shown on the dashboard of the diagnosis application:

```
 var button = new dashboard_button();
 button.show ("source : Spritzdüse -> event:verstopft abfragen");
```

This interface button now becomes part of the user interface code and is therefore shown on the dashboard for use by the diagnosis engineer.

The invention provides a method and apparatus for automated query interface and data model extension. The method and apparatus according to the present invention can be used for extension of any kind of application query interface AQI used in an industrial system. The application query interface AQI can be adapted and extended automatically in response to the monitored queries Q of the user. For instance, graphical production query interface comprises graphical query interface elements QIE that can be extended or adapted by the query interface compiler 3. For instance, new application query interface elements generated by the query interface part construction module 8A can be integrated by the query interface compiler 3 into the application query interface 4. This facilitates the operation of the industrial system and also saves time for the technicians working in the industrial system using the application query interface 4 for retrieval of query results. The apparatus 1 for automatic extension of the application query interface AQI of the industrial system as illustrated in the block diagram of Fig. 1 can be connected with a local network of the industrial system. Further, the apparatus 1 can also be integrated in a remote server of a service provider connected to a data network of the industrial system via the internet.

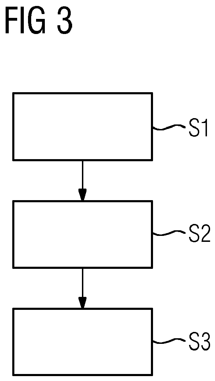

Fig. 3 shows a flowchart of a possible exemplary embodiment of a method for automatic extension of an application query interface AQI of an industrial system including three main steps S1, S2, S3.

The queries Q input by means of the application query interface AQI of the industrial system are monitored in step S1. A semantic and statistical analysis of the monitored queries Q is performed in the step S2 by a query analysis unit QAU to determine reoccurring queries and/or reoccurring query portions with the monitored queries. In step S3 the application query interface AQI of the industrial system is extended automatically with query interface elements QIE generated for the reoccurring queries and/or reoccurring query portions.

## Claims

1. A method for automatic extension of an application query interface, AQI, of an industrial system,
comprising the steps of:
(a) monitoring (S1) queries, Q, input by means of an application query interface, AQI, (4) of an industrial system;
(b) performing (S2) a statistic and semantic analysis of the monitored queries, Q, by a query analysis unit, QAU, (2) to determine reoccurring queries and/or reoccurring query portions within the monitored queries, Q; and
(c) extending (S3) automatically the application query interface, AQI, (4) of the industrial system with query interface elements, QIE, generated for the reoccurring queries and/or reoccurring query portions.

2. The method according to claim 1, wherein each monitored query, Q, is automatically decomposed in query portions, by a query decomposition module, QDM, of the query analysis unit, QAU, (2)
wherein the monitored queries, Q, and the decomposed query portions are evaluated by at least one statistic and/or semantic based query analysis algorithm, QAM, of an algorithm pool to determine reoccurring queries and/or reoccurring query portions within the monitored queries, Q.

3. The method according to claim 1 or 2, wherein the semantic analysis of the monitored queries, Q, is performed on the basis of a semantic model, SM, of the industrial system stored in a semantic model database, SMDB, (6).

4. The method according to claim 3, wherein the semantic model, SM, of the industrial system comprises an ontological data model of the industrial system stored in the semantic model database (6).

5. The method according to claims 3 to 4, wherein the semantic model, SM, of the industrial system stored in the semantic model database (6) is extended by semantic model parts, SMP, created by a semantic model part construction module, SMPCM, (8B) for the determined reoccurring queries and/or reoccurring query portions.

6. The method according to any of the preceding claims 3 to 5, wherein the semantic model, SM, of the industrial system is updated during runtime of the industrial system.

7. The method according to any of the preceding claims 1 to 6, wherein for the reoccurring queries and/or reoccurring query portions of the monitored queries, Q, query interface parts, QIP, are generated by a query interface part construction module, QIPCM, (8A) using predefined schemes, templates or rules.

8. The method according to any of the preceding claims 1 to 7, wherein the application query interface, AQI, (4) is extended with query interface elements, QIE, provided for the generated query interface parts, QIPs, by a query interface compiler, QIC, (3).

9. The method according to any of the preceding claims 1 to 8, wherein the application query interface, AQI, (4) comprises a graphical production query interface which includes graphical query interface elements, QIE, integrated by a query interface compiler, QIC, (3).

10. An apparatus for automatic extension of an application query interface, AQI, of an industrial system,
said apparatus (1) comprising:
- a query analysis unit, QAU, (2) adapted to monitor queries, Q, input by means of an application query interface, AQI, (4) of an industrial system and to perform a statistic and semantic analysis of the monitored queries, Q, to determine reoccurring queries and/or reoccurring query portions within the monitored queries, Q, and
- a query interface compiler, QIC, (3) adapted to extend automatically the application query interface, AQI, (4) of the industrial system with query interface elements, QIE, generated for the reoccurring queries and/or reoccurring query portions determined by said query analysis unit, QAU, (2).

11. The apparatus according to claim 10, wherein the query analysis unit, QAU, (2) comprises a query decomposition module, QDM, (2A) adapted to decompose automatically each monitored query into query portions.

12. The apparatus according to claim 10 or 11, wherein the query analysis unit, QAU, (2) comprises:
- a statistical analysis module (2B) adapted to perform a statistical analysis of the monitored queries and/or query portions using statistics based query analysis algorithms, and
- a semantic analysis module (2C) adapted to perform a semantic analysis of the monitored queries and/or query portions on the basis of a semantic model, SM, of the industrial system stored in a semantic model database (6) of the apparatus (1).

13. The apparatus according to any of the preceding claims 10 to 12, wherein the reoccurring queries and/or reoccurring query portions determined by the query analysis unit, QAU, (2) are stored in a query database (7) of the apparatus (1).

14. The apparatus according to any of the preceding claims 10 to 13 further comprising
a query interface part construction module, QIPCM, (8A) adapted to generate query interface parts, QIP, for the determined reoccurring queries and reoccurring query portions which do not yet comprise associated query interface parts, QIP,
wherein the query interface parts, QIP, generated by the query interface part construction module, QIPCM, (8A) are supplied to the query interface compiler, QIC, (3) which extends automatically the application query interface, AQI, (4) of the industrial system by integrating the query interface elements, QIE, provided for the generated query interface parts, QIP, into the application query interface, AQI, (4).

15. The apparatus according to any of the preceding claims 1 to 14 further comprising a semantic model part construction module, SMPCM, (8B) adapted to extend automatically the semantic model, SM, of the industrial system stored in the semantic model database, SMDB, (6) of the apparatus (1) with semantic model parts, SMP, generated by the semantic model part construction module, SMPCM, (8B) for the reoccurring queries and/or reoccurring query portions determined by the query analysis unit, QAU, (2) of the apparatus (1).
